# EUROPEAN PATENT SPECIFICATION

(11) **EP 4 478 725 B1**
(45) Date of publication and mention of the grant of the patent: **05.08.2026**
(21) Application number: 23179643.4
(22) Date of filing: 15.06.2023
(51) Int. Cl.: H04N 21/472, H04N 21/2187, H04N 21/81

(54) **A SYSTEM FOR INDIVIDUAL USER INTERACTION WITH A SHARED STREAMING INSTANCE**
SYSTEM ZUR INDIVIDUELLEN BENUTZERINTERAKTION MIT EINER GEMEINSAMEN STREAMING-INSTANZ
SYSTÈME D'INTERACTION D'UTILISATEUR INDIVIDUEL AVEC UNE INSTANCE DE DIFFUSION EN CONTINU PARTAGÉE

(43) Date of publication of application: 18.12.2024
(73) Proprietor: Unvs Unevis Ventures, Lda, 9000-048 Funchal, Madeira (PT)
(72) Inventor: Hänßgen, Mirko, 22769 Hamburg (DE); Grage, Pierre, 22085 Hamburg (DE)
(74) Representative: Invent Horizon IP

(56) References cited:
- US-A1- 2015 193 979
- US-A1- 2020 404 219
- US-A1- 2022 028 108

## Description

### Technical Field

The present disclosure relates to streaming of a virtual space to user client devices, and more particularly to a system for individual user interaction with a shared streaming instance of such virtual space and a related method.

### Background

In modern application streaming, a server instance is started in a cloud for each interactive, multimedia application. For 3D applications in particular, this means that powerful systems must be available that respond to the user's input in real time. Hosting these applications causes enormous costs for the provider and makes such an application sub-optimal as the number of users increase considerably, such as in applications utilized by global corporations. On the other hand, there are already a large number of providers for livestreaming today where content is made available by "streamers" to a large audience of millions live and in real time on their PC or mobile device. This audience may interact with the streamer exclusively via a public chat and point out something during the streaming with direct feedback, much like live broadcasts on television. The ability to directly influence the content by the audience is however limited and is subject to the streamer's preferences.

US2020/0404219 discloses systems and methods for immersive remote participation in live events hosted by interactive environments and experienced by users in immersive realities. Viewer feedback is input to the live interactive environments by a cloud server.

### Summary

It is an objective of the disclosure to at least partly overcome one or more of the above-identified limitations of the prior art.

One objective is to provide individual user interaction with a shared streaming instance so that the resources required to make the content available to a vast number of users is reduced, while allowing user interaction with the stream to attain relevant content for the group of participating users.

Another objective is to bridge the gap between passive broadcasting streams and individual streams in resource demanding applications to reduce the problems associated with each of these previous technologies.

One or more of these objectives, and other objectives that may appear from the description below, are at least partly achieved by means of a system for individual user interaction with a shared streaming instance of a virtual space, and a related method, according to the independent claims, embodiments thereof being defined by the dependent claims.

### Brief Description of the Drawings

These and other aspects, features and advantages of which examples of the disclosure are capable of will be apparent and elucidated from the following description of examples of the present disclosure, reference being made to the accompanying schematic drawings, in which;
Fig. 1 shows a schematic illustration of a system for individual user interaction with a shared streaming instance of a virtual space, according to an example;
Fig. 2 shows a schematic illustration of a distribution of a set of subsequent manipulations of a virtual space associated with a group of token inputs received from a plurality of user client devices during a first time interval, according to an example; and

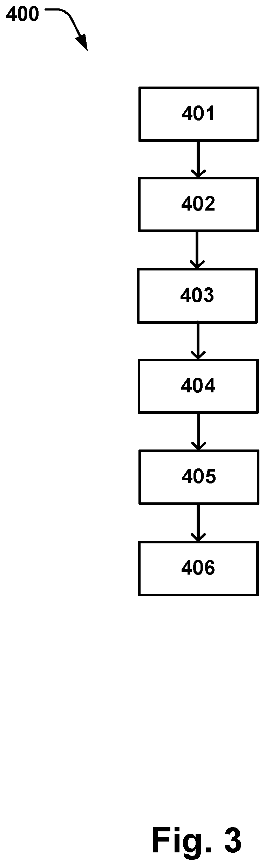

Fig. 3 is a flow chart of a method for individual user interaction with a shared streaming instance of a virtual space, according to an example.

### Detailed Description

Specific examples of the disclosure will now be described with reference to the accompanying drawings. This disclosure may, however, be embodied in many different forms and should not be construed as limited to the examples set forth herein; rather, these examples are provided so that this disclosure will be thorough and complete, and will fully convey the scope of the disclosure to those skilled in the art. The terminology used in the detailed description of the examples illustrated in the accompanying drawings is not intended to be limiting of the disclosure. In the drawings, like numbers refer to like elements.

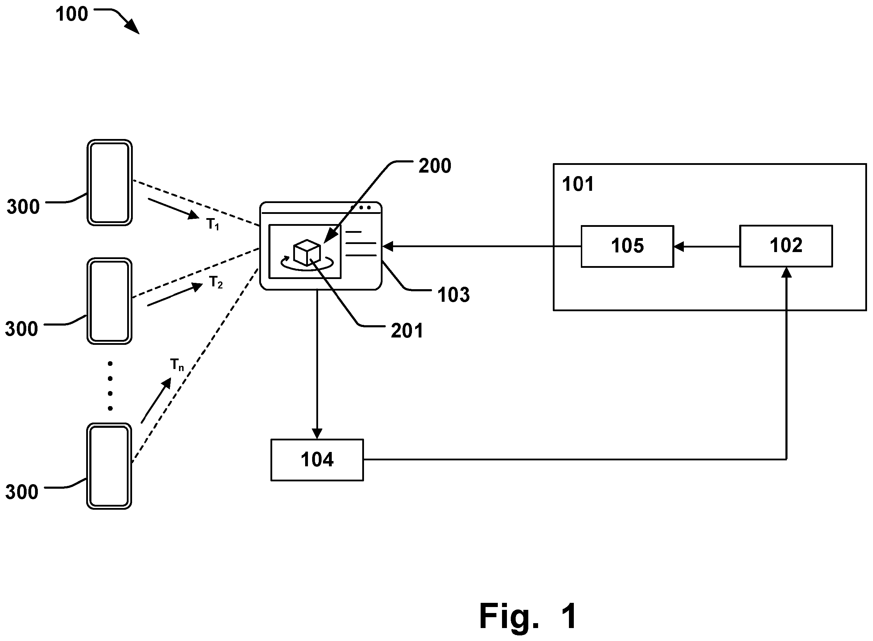

Fig. 1 is a schematic illustration of a system 100 for individual user interaction with a shared streaming instance of a virtual space 200. The system 100 comprises a broadcasting server 101. A processor 102 of the broadcasting server 101 is configured to generate the virtual space 200 for live broadcasting over a first streaming instance to a shared user interface 103 being configured to communicate with a plurality of user client devices 300. The virtual space 200 is thus viewable by a user on a respective user client device 300 when connecting to the shared user interface 103, which may be hosted by the broadcasting server 101 or a separate device or server which communicates with the broadcasting server 101. The broadcasting server 101 may host a separate streaming application 105 which broadcasts the first streaming instance to the shared user interface 103. It should be understood however that the broadcasting server 101 may directly host the shared user interface 103 to which the plurality of user client devices 300 may connect.

The virtual space 200 is an environment created by an application on the broadcasting server 101, executed on processor 102, and may be any 2D or 3D environment viewable on a user client device 300 such as a laptop or a mobile device. The virtual space 200 may be a virtual reality (VR), an augmented reality (AR), a mixed reality (MR) or other forms of realities (XR), and the user client device 300 may in such case be a headset such as VR goggles. The virtual space 200 may be viewable by the user from a first-person perspective, or from any perspective, e.g. including at least in part a virtual user avatar controllable by the user. The virtual space 200 may include various objects 201 and the user interaction as described below may comprise altering of the virtual space 200 as a whole and any part of it, such as altering of various objects 201, user viewpoints and camera angles, background, GUI (graphical user interface) elements etc, although reference is generally made to the virtual space 200 for brevity in the present disclosure.

The system 100 comprises a controller 104 in communication with the broadcasting server 101 and the plurality of user client devices 300. The controller 104 may comprise a processor and have a wired or wireless connection with the broadcasting server 101. Data input in the shared user interface 103 by any of the plurality of user client devices 300 may be communicated to the controller 104. The controller 104 is configured to detect or register a token input (T) in the shared user interface 103 by any of the plurality of user client devices 300 during a first time interval (t₁) of the first streaming instance. The first streaming instance is shared by the user client devices 300, upon broadcasting of the virtual space 200 by the broadcasting server 101. The token input (T) is determined by the controller 104 as specifying a subsequent manipulation of the virtual space 200, such as a change in the appearance of the virtual space 200, following the first time interval (t₁). Turning to the example in Fig. 1, the shared user interface 103 may receive a token input (T₁) from a particular user client device 300, which may be input by text, speech or gesture, as described further below. The token input (T₁) may specify to what extent an object 201 in the virtual space 200 should be manipulated, such as a change of shape, color or overall appearance or configuration of the object 201, once the first time interval (t₁) in the first streaming instance has been completed. The first time interval (t₁) may be a duration which depends on and is optimized to the type of application and virtual space 200 being streamed, such as in the range 10 - 60 seconds, or 1 - 10 minutes. The controller 104 is configured to register a set of said subsequent manipulations associated with a group of token inputs (T_{1,..., n}) received from the plurality of user client devices 300 during the first time interval (t₁) upon a termination of the first time interval (t₁). The token inputs (T₁,..., ₙ) may each specify a different manipulation of the virtual space 200. The controller 104 is configured to determine a distribution of the set of subsequent manipulations in dependence on a type of said subsequent manipulations, such as a type of change of an appearance of the virtual space 200.

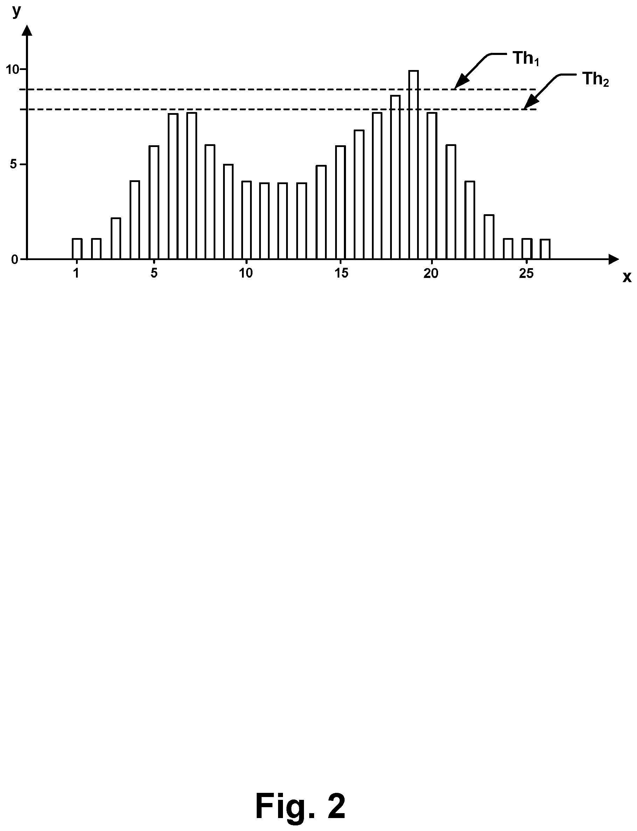

Fig. 2 shows a schematic illustration of a distribution of a set of subsequent manipulations of the virtual space 200 associated with a group of token inputs (T₁,..., ₙ) received from a plurality of user client devices 300 during a first time interval (t₁). In one example a group of 100 token inputs (T_{1,..., 100}) may have been registered by the controller 104. The group of token inputs (T₁,..., ₁₀₀) may specify a set of different types of manipulations of the virtual space 200. The example in Fig. 2 shows a set of 26 different types of such manipulations, by illustrating 26 different bars on the x-axis. I.e. each of the token inputs (T₁,..., ₁₀₀) specify one of these 26 different types, such as a type of change of an appearance of the virtual space 200, e.g. 26 different shapes or colors of an object 201 in the virtual space 200. The y-axis in the example of Fig. 2 indicates the frequency, i.e. the number of occurrences of the respective type of manipulation in the group of token inputs (T₁,..., ₁₀₀). E.g. the first type of manipulation, indicated by the bar at position 1 has an occurrence which is half the number of occurrences of the third type of manipulation, indicated by the bar at position 3, and so on. The type of manipulation which is the most frequent in the group of token inputs (T₁,..., ₁₀₀) is indicated by the bar at position 19 on the x-axis and 10 on the y-axis. The y-axis may indicate a percentage or absolute numbers. It should be understood that the distribution in Fig. 2 is an example for illustrative purposes and any other distribution may be registered depending on the token input (T₁,..., ₙ) received from a plurality of user client devices 300 and the virtual space 200 broadcasted for the particular application.

The controller 104 is configured to determine a primary manipulation action from the distribution of said types of subsequent manipulations. The primary manipulation may be determined by a statistical measure from the distribution, such as majority value, and/or by applying a threshold value (Th₁, Th₂) to the distribution. For example, based on the distribution in Fig. 2, the controller 104 may be configured to determine that the primary manipulation action corresponds to the type of manipulation as indicated by the bar at position 19 on the x-axis, having a value 10 on the y-axis.

The controller 104 is configured to instruct the processor 102 to alter the virtual space 200 based on the determined primary manipulation action. E.g. a majority of token inputs (T₁,..., ₙ) may specify a particular manipulation of the appearance of the virtual space 200 or any part of it, such as an object 201, a user viewpoint, a camera angle, a background, a GUI element etc, which is determined as the primary manipulation action and which is implemented by the aforementioned altering. The associated application generating the virtual space 200 may thus be instructed to alter the virtual space 200 and the resulting altered virtual space 200 is then broadcasted in a second time interval (t₂) of the first streaming instance, subsequent to the first time interval (t₁), to the plurality of user client devices 300 when connected to the shared user interface 103. As users may accordingly view the altered virtual space 200 on the user client devices 300, over the shared first streaming instance, which has been altered in accordance with the determined distribution of token inputs (T₁,..., ₙ) received during the first time interval (t₁). The virtual space 200 may thus be continuously updated during subsequent time intervals (tₙ) of the first streaming instance based on the group of token inputs (T₁,..., ₙ) received from the plurality of user client devices 300 during a respective time interval (tₙ). The controller 104 may thus be configured to continuously detect token input during a sequence of time intervals (tₙ) comprising the first time interval (t₁), the second time interval (t₂) and subsequent time intervals after the first and second time intervals to determine the corresponding primary manipulation actions throughout the sequence of time intervals (tₙ).

The system 100 thus allows the users to provide input to the shared first streaming instance and alter the virtual space 200 in accordance with the most desirable modifications thereof. Such user interaction is very resource efficient and can be utilized in a wide range of applications where user input from a large number of users is advantageous while not being limited by scaling issues which otherwise is the case in previous solutions where each user requires a separate streaming instance demanding huge computing resources as a consequence. Further, the problem of varying latency times for a group of users with individual streaming instances is reduced. The system provides user interaction with a shared streaming instance so that the resources required to make the content available to a vast number of users is reduced, while allowing user interaction with the stream to attain relevant content for the group of participating users. The system 100 bridges the gap between passive broadcasting streams and individual streams in resource demanding applications to reduce the problems associated with each of these previous technologies.

For example, the virtual space 200 may include configurable objects 201, such as objects in different simulators displaying a product which can be manipulated according to the user's liking such as car configurators or other product configurators. The object 201 may be any part of a virtual model of the product generated in the virtual space 200. A product developer or manufacturer utilizing such virtual model may be faced with the task of establishing the most likable configuration of the simulated product amongst a large number of users. The group of users may accordingly provide their respective token input (T) in the shared user interface 103 which specifies different types of manipulation of the virtual space 200, such as of an object 201 representing such simulated product. It is conceivable that the shared user interface 103 may define a range of possible or suggested manipulations in one example, which may be varied and adapted continuously along with the alterations of the virtual space 200 throughout the sequence of time intervals (tₙ) of the shared first streaming instance. The object 201, i.e. the simulated product in this example, may be altered throughout such sequence of time intervals (tₙ) of the shared first streaming instance based on the respectively determined distributions of the set of subsequent manipulations, specified by the token inputs (T₁,..., ₙ) from the user client devices 300, and the associated primary manipulation actions as described above. The product developer may thus deduce what is the most relevant configuration of the simulated product with a minimum of resources due to using a single broadcasting stream.

The controller 104 may be configured to detect one token input (T) from each of the plurality of user client devices 300 per time interval in the sequence of time intervals (tₙ). Each of the users may thus spend one token per time interval, such as one token input (T) during the first time interval (t₁) and one token input (T) during the second time interval (t₂) and so on.

The controller 104 may be configured to detect the token input (T) as a text input in the shared user interface 103. The respective user client devices 300 may thus send text input as input data to the shared user interface 103, representing the token (T) the respective user may spend to specify a subsequent manipulation of the virtual space 200. In the example of the virtual product configurator, such as a car configurator, the user may for example provide the token input (T) as text messages, e.g. "change the paint color to blue" or "open the driver door" during a time interval of the sequence of time intervals (tₙ) of the first streaming instance. Alternatively, or in addition, the controller 104 may be configured to detect the token input (T) as a speech input in the shared user interface 103. A user may for example orally instruct a subsequent manipulation in the associated user client device 300 and the registered audio from the oral instruction may be decoded by a speech recognition algorithm and sent as input data to the shared user interface 103, thus representing the token (T) the user may spend during a time interval (tₙ) of the first streaming instance to specify a subsequent manipulation of the virtual space 200. Alternatively, or in addition, the controller 104 may be configured to detect the token input (T) as a gesture input in the shared user interface 103. This may be particularly advantageous in case the user is participating in the first streaming instance by using VR goggles, if the virtual space 200 is a virtual reality (VR) or augmented reality (AR). For example, a group of users may be on a virtual guided tour where the path through the virtual space 200 adapts to the token inputs (Tₙ) from the associated user client devices 300. A user may point with a gesture in a certain direction, as may be determined by an image sensor of the user client device 300 such as VR goggles. The determined direction may be sent as input data to the shared user interface 103, thus representing the token (T) the user may spend during a first time interval (t₁) to specify a subsequent manipulation of the virtual space 200, in this case updating a path through the virtual space 200 with a specified direction. The virtual space 200 may be altered in a subsequent second time interval (t₂) of the streaming instance based on the distribution of the set of subsequent manipulations specified by a group of token inputs (T₁,..., ₙ) received from the plurality of user client devices 300 during the first time interval (t₁). For example, the group of users may be guided along a certain path where the majority of users point with their gestures. A more involving user experience can thus be provided to a large number of users while at the same time minimizing the demand on computational resources.

The controller 104 may be configured to detect token input (T) with a frequency having a time period which is shorter than the duration of the first time interval (t₁). The user's input may thus be continuously analysed during the time interval (t₁) and may presented back to the users, e.g. via the shared user interface 103, such as displaying a momentaneous distribution of the type of subsequent manipulation to incentivize participation with the streaming instance during the first and subsequent time intervals (tₙ).

The token input (T) may comprise a unique identifier associated with the respective user client device 300. The unique identifier may be the IP address of the user client device 300. This allows avoiding multiple entries by one user within the particular time interval (tₙ). The controller 104 may also be configured to detect a withdrawal of a token input (T) by any of the plurality of user client devices 300.

The controller 104 may be configured to apply a statistical measure on the distribution of the set of subsequent manipulations to determine the primary manipulation action from the distribution. The controller may be configured to determine the primary manipulation action from a majority of a type of subsequent manipulation in the distribution, as described in the examples above. It is however conceivable that other statistical measures can be applied to the distribution, such as weighted mean, truncated mean, or median values. The controller 104 may be configured to determine the primary manipulation action based on a defined threshold value in the distribution. Fig. 2 shows an example according to the invention of two different thresholds (Th₁, Th₂) in the distribution. The first threshold Th₁ is exceeded by only one bar, at position 19, and may thus be determined as the primary manipulation action in one example. The virtual space 200 may thus be altered based on the type of manipulation represented by the bar at position 19. In another example more than one threshold may be applied to the distribution to determine more than one primary manipulation action. Thus, in one example the controller 104 may be configured to determine a first and second primary manipulation action exceeding a defined threshold value (Th₁, Th₂), such as a percentage, of a type of subsequent manipulation in the distribution. The second threshold Th₂ in the example in Fig. 2 is exceeded by two bars, at position 18 and 19. A first primary manipulation action may thus be determined as the type of manipulation represented by the bar at position 19, and a second primary manipulation action may be determined as the type of manipulation represented by the bar at position 18. The virtual space 200 may thus be altered based on both types of manipulations represented by the bars at positions 18 and 19. In the example above of a guided virtual tour, the group of users may be directed on a path in the virtual space 200 which is an approximation of two neighboring paths which were specified by token input of two types of manipulations, such as exceeding a threshold Th₂ in the example of Fig. 2. In the example of a product configurator showing a virtual model of a product, the determined alteration of the virtual model may likewise be an approximation or otherwise aggregate of more than one primary manipulation action determined from the distribution.

In a further example according to the invention the controller 104 may be configured to instruct the processor 102 to alter the virtual space 200 based on the first primary manipulation action in the first streaming instance, and to broadcast an altered virtual space 200 based on the second primary manipulation action over a second streaming instance. The broadcast may thus be split up in first and second streaming instances with the respective altered virtual space 200. For example the group of token inputs (T₁,..., ₙ) may generate a distribution which is centered around two main types of subsequent manipulations, generating two main alterations of the virtual space 200 which are broadcasted in the respective first and second streaming instances in the second time interval (t₂). This allows for further increasing the sense of participation and relevance of the streamed virtual space 200 to a greater number of users while still maintaining a relatively low demand on computational resources. The controller 104 may be configured to direct a user client device 300 to the second streaming instance if the associated token input (T) matches the second primary manipulation action. Thus, a majority of the users may follow their path of selection. Other users may remain in the first streaming instance. The controller 104 may be configured to determine a group of primary manipulation actions exceeding a threshold percentage of a type of subsequent manipulation in the distribution, and to instruct the processor to scale the number of streaming instances of correspondingly altered virtual spaces 200 according to a size of the group. I.e. the broadcast may branch out with a number of streaming instances which corresponds to the number of determined primary manipulation actions. Lowering the threshold, e.g. Th₂ in Fig. 2, can thus result in a larger number of alterations of the virtual space 200 which may be branched out in a corresponding number of streaming instances.

Fig. 5 is a flowchart of a method 400 for individual user interaction with a shared streaming instance of a virtual space 200. The method 400 comprises generating 401 the virtual space 200 for live broadcasting from a broadcasting server 101 over a first streaming instance to a shared user interface 103 configured to communicate with a plurality of user client devices 300. The method 400 comprises detecting 402 a token input (T) in the shared user interface 103 by any of the plurality of user client devices 300 during a first time interval (t₁) of the first streaming instance, were the token input (T) is determined as specifying a subsequent manipulation of the virtual space 200, such as a change in the appearance of the virtual space 200, following the first time interval (t₁). The method 400 comprises registering 403 a set of said subsequent manipulations associated with a group of token inputs (T₁,..., ₙ) received from the plurality of user client devices 300 during the first time interval (t₁) upon a termination of the first time interval (t₁). The method comprises determining 404 a distribution of the set of subsequent manipulations in dependence on a type of said subsequent manipulations, such as a type of change of the appearance of the virtual space 200. The method 400 comprises determining 405 a primary manipulation action from the distribution of said types of subsequent manipulations. The method 400 comprises instructing 406 the processor 102 to alter the virtual space 200 based on the determined primary manipulation action and to broadcast the altered virtual space 200 in a second time interval (t₂) of the first streaming instance, subsequent to the first time interval (t₁), to the plurality of user client devices 300 when connected to the shared user interface 103. The method 400 thus provides for the advantageous benefits as described above for the system 100 in relation to Figs. 1 - 2. The method 400 provides for individual user interaction with a shared streaming instance so that the resources required to make the content available to a vast number of users is reduced, while allowing user interaction with the stream to attain relevant content for the group of users. The method 400 provides for bridging the gap between passive broadcasting streams and individual streams in resource demanding applications to reduce the problems associated with each of these previous technologies.

A computer program product is provided comprising instructions which, when the program is executed by a computer, cause the computer to carry out the steps of the method 400.

The present disclosure has been described above with reference to specific examples. However, other examples than the above described are equally possible within the scope of the disclosure. The different features and steps of the disclosure may be combined in other combinations than those described. The scope of the disclosure is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present disclosure is/are used.

## Claims

1. A system (100) for individual user interaction with a shared streaming instance of a virtual space (200), the system comprising
a broadcasting server (101), wherein a processor (102) of the broadcasting server is configured to generate the virtual space for live broadcasting over a first streaming instance to a shared user interface (103) configured to communicate with a plurality of user client devices (300),
a controller (104) in communication with the broadcasting server and the plurality of user client devices and being configured to
detect a token input (T) in the shared user interface by any of the plurality of user client devices during a first time interval (t₁) of the first streaming instance, wherein the token input is determined as specifying a subsequent manipulation of the virtual space, such as a change in an appearance of the virtual space, following the first time interval,
register a set of said subsequent manipulations associated with a group of token inputs (T₁,..., ₙ) received from the plurality of user client devices during the first time interval upon a termination of the first time interval,
determine a distribution of the set of subsequent manipulations in dependence on a type of said subsequent manipulations, such as a type of change of said appearance of the virtual space,
determine a primary manipulation action from the distribution of said types of subsequent manipulations,
instruct the processor to alter the virtual space based on the determined primary manipulation action and to broadcast the altered virtual space in a second time interval (t₂) of the first streaming instance, subsequent to the first time interval, to the plurality of user client devices when connected to the shared user interface, **characterized in that**
the controller is configured to determine a first and second primary manipulation action exceeding a defined threshold value, such as a percentage, of a type of subsequent manipulation in the distribution, and
wherein the controller is configured to instruct the processor to alter the virtual space based on the first primary manipulation action in the first streaming instance, and to broadcast an altered virtual space based on the second primary manipulation action over a second streaming instance.

2. System according to claim 1, wherein the controller is configured to continuously detect token input during a sequence of time intervals comprising the first time interval, the second time interval and subsequent time intervals after the first and second time intervals to determine corresponding primary manipulation actions throughout the sequence of time intervals.

3. System according to claim 2, wherein the controller is configured to detect one token input from each of the plurality of user client devices per time interval in the sequence of time intervals.

4. System according to any of claims 1 - 3, wherein the controller is configured to detect the token input as a text input in the shared user interface.

5. System according to any of claims 1 - 4, wherein the controller is configured to detect the token input as a speech input in the shared user interface.

6. System according to any of claims 1 - 5, wherein the controller is configured to detect the token input as a gesture input in the shared user interface.

7. System according to any of claims 1 - 6, wherein the controller is configured to detect token input with a frequency having a time period which is shorter than the duration of the first time interval.

8. System according to any of claims 1 - 7, wherein the controller is configured to determine the primary manipulation action from a majority of a type of subsequent manipulation in the distribution.

9. System according to any of claims 1 - 8, wherein the controller is configured to determine the primary manipulation action based on a defined threshold value in the distribution.

10. System according to any of claims 1 - 9, wherein the token input comprises a unique identifier associated with the respective user client device.

11. System according to claim 1, wherein the controller is configured to direct a user client device to the second streaming instance if the associated token input matches the second primary manipulation action.

12. System according to any of claims 1 - 11, wherein the controller is configured to determine a group of primary manipulation actions exceeding a threshold percentage of a type of subsequent manipulation in the distribution, and to instruct the processor to scale the number of streaming instances of correspondingly altered spaces according to a size of the group.

13. A method (400) for individual user interaction with a shared streaming instance of a virtual space (200), comprising
generating (401) the virtual space for live broadcasting from a broadcasting server (101) over a first streaming instance to a shared user interface (103) configured to communicate with a plurality of user client devices (300),
detecting (402) a token input (T) in the shared user interface by any of the plurality of user client devices during a first time interval (t₁) of the first streaming instance, wherein the token input is determined as specifying a subsequent manipulation of the virtual space, such as a change in the appearance of the virtual space, following the first time interval,
registering (403) a set of said subsequent manipulations associated with a group of token inputs (T₁,..., ₙ) received from the plurality of user client devices during the first time interval upon a termination of the first time interval,
determining (404) a distribution of the set of subsequent manipulations in dependence on a type of said subsequent manipulations, such as a type of change of said appearance of the virtual space,
determining (405) a primary manipulation action from the distribution of said types of subsequent manipulations,
instructing (406) a processor to alter the virtual space based on the determined primary manipulation action and to broadcast the altered virtual space in a second time interval (t₂) of the first streaming instance, subsequent to the first time interval, to the plurality of user client devices when connected to the shared user interface, **characterized by**
determining a first and second primary manipulation action exceeding a defined threshold value, such as a percentage, of a type of subsequent manipulation in the distribution, and
instructing the processor to alter the virtual space based on the first primary manipulation action in the first streaming instance, and to broadcasting an altered virtual space based on the second primary manipulation action over a second streaming instance.

## Patentansprüche

1. System (100) zur individuellen Benutzerinteraktion mit einer gemeinsam genutzten Streaming-Instanz eines virtuellen Raums (200), wobei das System Folgendes umfasst:
einen Ausstrahlungsserver (101), wobei ein Prozessor (102) des Ausstrahlungsservers dazu ausgelegt ist, den virtuellen Raum zur Live-Ausstrahlung über eine erste Streaming-Instanz an eine gemeinsam genutzte Benutzerschnittstelle (103), die zum Kommunizieren mit mehreren Benutzer-Client-Vorrichtungen (300) ausgelegt ist, zu erzeugen,
eine Steuerung (104), die mit dem Ausstrahlungsserver und den mehreren Benutzer-Client-Vorrichtungen in Kommunikation steht und zu Folgendem ausgelegt ist:
Detektieren einer Token-Eingabe (T) in der gemeinsam genutzten Benutzerschnittstelle durch beliebige der mehreren Benutzer-Client-Vorrichtungen während eines ersten Zeitintervalls (t₁) der ersten Streaming-Instanz, wobei die Token-Eingabe als eine nachfolgende Manipulation des virtuellen Raums, wie etwa eine Änderung eines Erscheinungsbilds des virtuellen Raums, nach dem ersten Zeitintervall spezifizierend bestimmt wird,
Registrieren eines Satzes der nachfolgenden Manipulationen, die mit einer Gruppe von Token-Eingaben (T₁,..., ₙ) assoziiert sind, die während des ersten Zeitintervalls von den mehreren Benutzer-Client-Vorrichtungen empfangen werden, bei Beendigung des ersten Zeitintervalls,
Bestimmen einer Verteilung des Satzes nachfolgender Manipulationen in Abhängigkeit von einer Art der nachfolgenden Manipulationen, wie etwa einer Art der Änderung des Erscheinungsbilds des virtuellen Raums,
Bestimmen einer primären Manipulationsaktion aus der Verteilung der Arten nachfolgender Manipulationen,
Anweisen des Prozessors zum Verändern des virtuellen Raums basierend auf der bestimmten primären Manipulationsaktion und Ausstrahlen des veränderten virtuellen Raums in einem zweiten Zeitintervall (t₂) der ersten Streaming-Instanz nach dem ersten Zeitintervall an die mehreren Benutzer-Client-Vorrichtungen bei Verbindung mit der gemeinsam genutzten Benutzeroberfläche, **dadurch gekennzeichnet, dass**
die Steuerung dazu ausgelegt ist, eine erste und eine zweite primäre Manipulationsaktion, die einen definierten Schwellenwert, wie etwa einen Prozentsatz, einer Art nachfolgender Manipulation überschreiten, in der Verteilung zu bestimmen, und
wobei die Steuerung dazu ausgelegt ist, den Prozessor dazu anzuweisen, den virtuellen Raum basierend auf der ersten primären Manipulationsaktion in der ersten Streaming-Instanz zu verändern und einen veränderten virtuellen Raum basierend auf der zweiten primären Manipulationsaktion über eine zweite Streaming-Instanz auszustrahlen.

2. System nach Anspruch 1, wobei die Steuerung dazu ausgelegt ist, während einer Sequenz von Zeitintervallen, die das erste Zeitintervall, das zweite Zeitintervall und nachfolgende Zeitintervalle nach dem ersten und zweiten Zeitintervall umfassen, kontinuierlich eine Token-Eingabe zu detektieren, um entsprechende primäre Manipulationsaktionen über die Sequenz von Zeitintervallen hinweg zu bestimmen.

3. System nach Anspruch 2, wobei die Steuerung dazu ausgelegt ist, eine Token-Eingabe von jeder der mehreren Benutzer-Client-Vorrichtungen pro Zeitintervall in der Sequenz von Zeitintervallen zu detektieren.

4. System nach einem der Ansprüche 1 bis 3, wobei die Steuerung dazu ausgelegt ist, die Token-Eingabe als eine Texteingabe in der gemeinsam genutzten Benutzerschnittstelle zu detektieren.

5. System nach einem der Ansprüche 1 bis 4, wobei die Steuerung dazu ausgelegt ist, die Token-Eingabe als eine Spracheingabe in der gemeinsam genutzten Benutzerschnittstelle zu detektieren.

6. System nach einem der Ansprüche 1 bis 5, wobei die Steuerung dazu ausgelegt ist, die Token-Eingabe als eine Gesteneingabe in der gemeinsam genutzten Benutzerschnittstelle zu detektieren.

7. System nach einem der Ansprüche 1 bis 6, wobei die Steuerung dazu ausgelegt ist, eine Token-Eingabe mit einer Frequenz zu detektieren, die eine Zeitperiode aufweist, die kürzer als die Dauer des ersten Zeitintervalls ist.

8. System nach einem der Ansprüche 1 bis 7, wobei die Steuerung dazu ausgelegt ist, die primäre Manipulationsaktion anhand einer Mehrheit einer Art nachfolgender Manipulation in der Verteilung zu bestimmen.

9. System nach einem der Ansprüche 1 bis 8, wobei die Steuerung dazu ausgelegt ist, die primäre Manipulationsaktion basierend auf einem definierten Schwellenwert in der Verteilung zu bestimmen.

10. System nach einem der Ansprüche 1 bis 9, wobei die Token-Eingabe eine eindeutige Kennung umfasst, die mit der jeweiligen Benutzer-Client-Vorrichtung assoziiert ist.

11. System nach Anspruch 1, wobei die Steuerung dazu ausgelegt ist, eine Benutzer-Client-Vorrichtung zu der zweiten Streaming-Instanz zu leiten, falls die assoziierte Token-Eingabe mit der zweiten primären Manipulationsaktion übereinstimmt.

12. System nach einem der Ansprüche 1 bis 11, wobei die Steuerung dazu ausgelegt ist, eine Gruppe primärer Manipulationsaktionen zu bestimmen, die einen Schwellenprozentsatz einer Art nachfolgender Manipulation in der Verteilung überschreiten, und den Prozessor dazu anzuweisen, die Anzahl von Streaming-Instanzen von entsprechend veränderten Räumen gemäß einer Größe der Gruppe zu skalieren.

13. Verfahren (400) zur individuellen Benutzerinteraktion mit einer gemeinsam genutzten Streaming-Instanz eines virtuellen Raums (200), das Folgendes umfasst:
Erzeugen (401) des virtuellen Raums zur Live-Ausstrahlung von einem Ausstrahlungsserver (101) über eine erste Streaming-Instanz an eine gemeinsam genutzte Benutzeroberfläche (103), die dazu ausgelegt ist, mit mehreren Benutzer-Client-Vorrichtungen (300) zu kommunizieren,
Detektieren (402) einer Token-Eingabe (T) in der gemeinsam genutzten Benutzerschnittstelle durch beliebige der mehreren Benutzer-Client-Vorrichtungen während eines ersten Zeitintervalls (t₁) der ersten Streaming-Instanz, wobei die Token-Eingabe als eine nachfolgende Manipulation des virtuellen Raums, wie etwa eine Änderung des Erscheinungsbilds des virtuellen Raums, nach dem ersten Zeitintervall spezifizierend bestimmt wird,
Registrieren (403) eines Satzes der nachfolgenden Manipulationen, die mit einer Gruppe von Token-Eingaben (T₁,..., ₙ) assoziiert sind, die während des ersten Zeitintervalls von den mehreren Benutzer-Client-Vorrichtungen empfangen werden, bei Beendigung des ersten Zeitintervalls,
Bestimmen (404) einer Verteilung des Satzes nachfolgender Manipulationen in Abhängigkeit von einer Art der nachfolgenden Manipulationen, wie etwa einer Art der Änderung des Erscheinungsbilds des virtuellen Raums,
Bestimmen (405) einer primären Manipulationsaktion aus der Verteilung der Arten nachfolgender Manipulationen,
Anweisen (406) eines zum Verändern des virtuellen Raums basierend auf der bestimmten primären Manipulationsaktion und Ausstrahlen des veränderten virtuellen Raums in einem zweiten Zeitintervall (t₂) der ersten Streaming-Instanz nach dem ersten Zeitintervall an die mehreren Benutzer-Client-Vorrichtungen bei Verbindung mit der gemeinsam genutzten Benutzeroberfläche, **gekennzeichnet durch**
Bestimmen einer ersten und einer zweiten primären Manipulationsaktion, die einen definierten Schwellenwert, wie etwa einen Prozentsatz, einer Art nachfolgender Manipulation überschreiten, in der Verteilung und
Anweisen des Prozessors zum Verändern des virtuellen Raums basierend auf der ersten primären Manipulationsaktion in der ersten Streaming-Instanz und Ausstrahlen eines veränderten virtuellen Raums basierend auf der zweiten primären Manipulationsaktion über eine zweite Streaming-Instanz.

## Revendications

1. Système (100) permettant l'interaction d'un utilisateur individuel avec une instance de diffusion en continu partagée d'un espace virtuel (200), le système comprenant
un serveur de diffusion (101), où un processeur (102) du serveur de diffusion est configuré pour générer l'espace virtuel pour une diffusion en direct sur une première instance de diffusion en continu vers une interface utilisateur partagée (103) configurée pour communiquer avec une pluralité de dispositifs clients d'utilisateur (300),
un contrôleur (104) en communication avec le serveur de diffusion et la pluralité de dispositifs clients d'utilisateur, et configuré pour
détecter une entrée de jeton (T) dans l'interface utilisateur partagée par l'un quelconque de la pluralité de dispositifs clients d'utilisateur pendant un premier intervalle de temps (t₁) de la première instance de diffusion en continu, l'entrée de jeton étant déterminée comme spécifiant une manipulation ultérieure de l'espace virtuel, telle qu'un changement d'aspect de l'espace virtuel, après le premier intervalle de temps,
enregistrer un ensemble desdites manipulations ultérieures associées à un groupe d'entrées de jeton (T₁,..., ₙ) reçu de la pluralité de dispositifs clients d'utilisateur au cours du premier intervalle de temps lors de la fin du premier intervalle de temps, déterminer une distribution de l'ensemble des manipulations ultérieures en fonction du type desdites manipulations ultérieures, tel qu'un type de changement dudit aspect de l'espace virtuel,
déterminer une action de manipulation principale à partir de la distribution desdits types de manipulations ultérieures,
donner pour instruction au processeur de modifier l'espace virtuel sur la base de l'action de manipulation principale déterminée et de diffuser l'espace virtuel modifié dans un deuxième intervalle de temps (t₂) de la première instance de diffusion en continu, après le premier intervalle de temps, à la pluralité de dispositifs clients d'utilisateur lorsqu'ils sont connectés à l'interface utilisateur partagée, ce qui est **caractérisé en ce que**
le contrôleur est configuré pour déterminer une première action de manipulation principale et une deuxième action de manipulation principale dépassant une valeur seuil définie, telle qu'un pourcentage, d'un type de manipulation ultérieure dans la distribution, et
où le contrôleur est configuré pour donner pour instruction au processeur de modifier l'espace virtuel sur la base de la première action de manipulation principale dans la première instance de diffusion en continu, et pour diffuser un espace virtuel modifié sur la base de la deuxième action de manipulation principale sur une deuxième instance de diffusion en continu.

2. Système selon la revendication 1, dans lequel le contrôleur est configuré pour détecter en continu une entrée de jeton pendant une séquence d'intervalles de temps comprenant le premier intervalle de temps, le deuxième intervalle de temps et les intervalles de temps suivants qui suivent les premier et deuxième intervalles de temps afin de déterminer des actions de manipulation principales correspondantes tout au long de la séquence d'intervalles de temps.

3. Système selon la revendication 2, dans lequel le contrôleur est configuré pour détecter une entrée de jeton à partir de chacun de la pluralité de dispositifs clients d'utilisateur par intervalle de temps dans la séquence d'intervalles de temps.

4. Système selon l'une quelconque des revendications 1 à 3, dans lequel le contrôleur est configuré pour détecter l'entrée de jeton en tant qu'entrée de texte dans l'interface utilisateur partagée.

5. Système selon l'une quelconque des revendications 1 à 4, dans lequel le contrôleur est configuré pour détecter l'entrée de jeton en tant qu'entrée de parole dans l'interface utilisateur partagée.

6. Système selon l'une quelconque des revendications 1 à 5, dans lequel le contrôleur est configuré pour détecter l'entrée de jeton en tant qu'entrée de geste dans l'interface utilisateur partagée.

7. Système selon l'une quelconque des revendications 1 à 6, dans lequel le contrôleur est configuré pour détecter une entrée de jeton avec une fréquence ayant une période de temps qui est plus courte que la durée du premier intervalle de temps.

8. Système selon l'une quelconque des revendications 1 à 7, dans lequel le contrôleur est configuré pour déterminer l'action de manipulation principale à partir d'une majorité d'un type de manipulation ultérieure dans la distribution.

9. Système selon l'une quelconque des revendications 1 à 8, dans lequel le contrôleur est configuré pour déterminer l'action de manipulation principale sur la base d'une valeur seuil définie dans la distribution.

10. Système selon l'une quelconque des revendications 1 à 9, dans lequel l'entrée de jeton comprend un identifiant unique associé au dispositif client utilisateur respectif.

11. Système selon la revendication 1, dans lequel le contrôleur est configuré pour diriger un dispositif client utilisateur vers la deuxième instance de diffusion en continu si l'entrée de jeton associée correspond à la deuxième action de manipulation principale.

12. Système selon l'une quelconque des revendications 1 à 11, dans lequel le contrôleur est configuré pour déterminer un groupe d'actions de manipulation principales dépassant un pourcentage seuil d'un type de manipulation ultérieure dans la distribution, et pour donner pour instruction au processeur de mettre à l'échelle le nombre d'instances de diffusion en continu d'espaces modifiés de manière correspondante en fonction d'une taille du groupe.

13. Procédé (400) d'interaction d'un utilisateur individuel avec une instance de diffusion en continu partagée d'un espace virtuel (200), le procédé comprenant les étapes suivantes
générer (401) l'espace virtuel pour la diffusion en direct à partir d'un serveur de diffusion (101) sur une première instance de diffusion en continu vers une interface utilisateur partagée (103) configurée pour communiquer avec une pluralité de dispositifs clients d'utilisateur (300),
détecter (402) une entrée de jeton (T) dans l'interface utilisateur partagée par l'un quelconque de la pluralité de dispositifs clients d'utilisateur pendant un premier intervalle de temps (t₁) de la première instance de diffusion en continu, l'entrée de jeton étant déterminée comme spécifiant une manipulation ultérieure de l'espace virtuel, telle qu'un changement d'aspect de l'espace virtuel, après le premier intervalle de temps,
enregistrer (403) un ensemble desdites manipulations ultérieures associées à un groupe d'entrées de jeton (T₁,..., ₙ) reçu de la pluralité de dispositifs clients d'utilisateur au cours du premier intervalle de temps lors de la fin du premier intervalle de temps,
déterminer (404) une distribution de l'ensemble des manipulations ultérieures en fonction du type desdites manipulations ultérieures, tel qu'un type de changement dudit aspect de l'espace virtuel,
déterminer (405) une action de manipulation principale à partir de la distribution desdits types de manipulations ultérieures,
donner pour instruction (406) à un processeur de modifier l'espace virtuel sur la base de l'action de manipulation principale déterminée et de diffuser l'espace virtuel modifié dans un deuxième intervalle de temps (t₂) de la première instance de diffusion en continu, après le premier intervalle de temps, à la pluralité de dispositifs clients d'utilisateur lorsqu'ils sont connectés à l'interface utilisateur partagée, ce qui est **caractérisé par**
la détermination d'une première action de manipulation principale et d'une deuxième action de manipulation principale dépassant une valeur seuil définie, telle qu'un pourcentage, d'un type de manipulation ultérieure dans la distribution, et
l'instruction au processeur de modifier l'espace virtuel sur la base de la première action de manipulation principale dans la première instance de diffusion en continu, et de diffuser un espace virtuel modifié sur la base de la deuxième action de manipulation principale sur une deuxième instance de diffusion en continu.
